# EUROPEAN PATENT APPLICATION

(11) **EP 4 647 959 A1**
(43) Date of publication of application: **12.11.2025**
(21) Application number: 24174420.0
(22) Date of filing: 07.05.2024
(51) Int. Cl.: G06F 40/58

(54) **A METHOD FOR TRANSLATING WEBSITES, A COMPUTER-READABLE STORAGE MEDIUM AND A WEB SERVER FOR PERFORMING THE METHOD**

(71) Applicant: Web Inclusion GmbH, 97276 Margetshöchheim (DE)
(72) Inventor: Greiner, Tobias, 97276 Margetshöchheim (DE)
(74) Representative: RGTH

(57) **Abstract**

A method, computer-readable storage medium and web server for translating websites is provided. The method for translating websites, comprising: in a web server, providing a website to a user at a client, wherein the website includes a plugin; by means of the plugin: receiving an input from the user, translating the text of the website, and providing the translated text of the website with the original formatting of the website to the user; wherein translating of the website comprises a translation into Plain Language or Easy Language.

## Description

### Technical Field

The present invention relates generally to the technical field of natural language processing (NLP), more particularly to a method for translating websites, a computer-readable storage medium and a web server for performing the steps of the method.

### Background

Plain Language or Easy Language is clear, concise communication that avoids unnecessary complexity. It aims to ensure that everyone can easily understand information, regardless of their background or level of education. The need for Plain Language arises because complex jargon and convoluted sentences can confuse or alienate readers, hindering comprehension and accessibility.

Translators in the form of a website or a software are available to translate texts into Plain Language. Typically, when using such a translator, a user enters the text to be translated into a translator's translation field, and the translator performs a live translation of the text into Plain Language. Optionally, such translators could evaluate the readability of the generated Plain Language with a feedback system.

However, when a user is scrolling through websites, it is not convenient to copy and paste the text of a website to a translator for translation into Plain Language. Firstly, unnecessary text of the website, such as header, navigation menu, and/or the footer including copyright information, might also be inadvertently copied and pasted to the translator, thereby affecting the translation results. In some situations, the unnecessary text is interspersed with the text to be translated, making the translation of the copied and pasted text incomprehensible. In addition, the formatting of the text of the website is usually lost when copying and pasting from websites to the translator, and it is likely that a part of the information conveyed by the formatting may not be shown in the translated text anymore.

There is therefore a need for a more convenient and accurate way of translating contents of websites into Plain Language.

### Description of the Invention

It is an aspect of the present invention to provide a method for translating websites that offers a convenient and accurate way of translating website content into Plain Language or Easy Language.

The method according to the present invention comprises: in a web server, providing a website to a user at a client, wherein the website includes a plugin; by means of the plugin: receiving an input from the user, translating the text of the website, and providing the translated text of the website with the original formatting of the website to the user; wherein translating of the website comprises, in particular is, a translation into Plain Language or Easy Language.

Accordingly, the present invention provides a website plugin that is independent of operating system and browser. For example, all HTML interfaces are supported.

The plugin receives an input from the user to initiate the translation. For example, a "start button" is provided by the plugin to the user for the initiation. As another example, the input for the initiation can also be applied via JavaScript API. Other possible inputs can also be provided, and the input format can be customised as required.

Subsequently, the plugin translates the text of the website into Plain Language or Easy Language and provides the translated text to the user on the website, thereby eliminating the need to copy and paste the text of the website into a translator.

The translated text is generated with the original formatting of the website in the translated text. For example, the original formatting of the text comprises stylistic elements such as bold and/or italics, font size, and embedded links. The method according to the present invention uses the original formatting in the appropriate places of the translated text, which allows for the translation to be as accurate as possible by preserving all the information in the original formatting of the text.

Furthermore, it is understood that the translation of texts on websites into Plain Language or Easy Language can optionally be combined with a translation from one language to another language, such as from French to English.

In a preferred embodiment of the method, the step of providing the translated text of the website in original formatting comprises: dynamically providing a website consisting of the translated text of the website and the original formatting by modifying the nodes of a Document Object Model, DOM tree of the displayed website, or statically providing a website consisting of the translated text of the website and the original formatting by generating a modified HTML document.

Accordingly, the website plugin allows the translation to be initiated and received directly on the website, and the translated text is overwritten in real time exactly where it was before, meaning there is no loss of layout and the content of the rest of the website is retained.

In a further embodiment of the method, the step of translating the website comprises: by means of the plugin: transmitting the text of the website to a translation server, and on the translation server: translating the text of the website and sending back the translated text.

Accordingly, the user does not need to copy and paste the text of the website to a translator typically in the form of a separate website or a software for translation, as the text of the website and the translated text would be automatically transmitted by the plugin.

Optionally, the step of translating the text of the website on the translation server comprises translating the text of the website using a Large Language Model (LLM), preferably OpenAI GPT4 or Anthropic Claude. Such modern large language models ensure a high quality of the translation.

In yet another embodiment of the method, the step of translating using a LLM includes at least one of the following steps: fine-tuning the model with existing Plain Language or Easy Language translations, using a pass through the LLM using a first prompt with the Plain Language or Easy Language rules, using a second pass through the LLM using a second prompt, and automatically editing the translated text to separate and/or hyphenate long words.

Accordingly, LLM, such as OpenAI GPT4 or Anthropic Claude, serve as the basis for translation for the model.

The model can be fine-tuned with existing Plain Language or Easy Language translations.

A first prompt with the rules of Plain Language or of Easy Language can be used to pass through the model. Optionally, small optimizations for ideal network performance can be applied, such as reward incentives for the network, optimization of the command sequence, and inclusion of the text context (text before and after the paragraph) for better understanding of the text.

Besides, a second prompt can be applied to the model to correct possible comprehension errors in the first run. It can be understood that more than one second prompt can be used for quality assurance and improvement.

Lastly, a special prompt can be applied for automatically editing the translated text to separate and/or hyphenate long words.

In a further embodiment of the method, the step of translating the website comprises: checking whether the translation is present in a cache: if the translation is present in the cache: providing the translation from the cache, if the translation is not present in the cache: generating a new translation and storing it in the cache.

Accordingly, translations stored in the cache can be retrieved much more quickly. These steps ensure that the method is highly efficient and reduces consumption in the translation process.

In an embodiment of the method, the plugin is a plugin running on the client, preferably JavaScript, and the step of, by means of the plugin, transmitting the text of the website to a translation server includes: sending the text of the website from the client to the translation server, or sending a URL of the website from the client to the translation server and, on the translation server, requesting the website from the web server or another web server by means of the URL and extracting the text from the transmitted website.

Accordingly, the plugin of the present method is applicable to any webpages using JavaScript. Hence, the plugin is independent of a Content Management System (CMS).

In another embodiment of the method, the plugin is a plugin running on the web server, and the step of, by means of the plugin, transmitting the text of the website to a translation server includes: extracting and sending the text of the website from the web server to the translation server.

It can be understood that the plugin can be a PHP plugin, e.g. for Wordpress, but could also be another type of plugin so that the plugin is independent of a CMS.

In a further embodiment of the method, the step of extracting the text of the website comprises: extracting the matching texts of the website by means of a whitelist and/or a blacklist, wherein texts of a whitelist, preferably texts comprising longer blocks and complex words, are explicitly extracted and texts of a blacklist, preferably comprising embedded links and proper names, are not extracted.

Accordingly, texts that have a higher chance of causing difficulty in reading, such as texts comprising longer blocks and/or complex words, and other texts that are easy to understand and/or texts comprising embedded links and/or proper names are extracted into different lists, for example a whitelist for the former texts and a blacklist for the latter. Texts in the whitelist are explicitly extracted while texts in the blacklist are not, thereby saving computational power and increasing the efficiency of the translation. However, it can be understood that the current method recognizes existing styling (e.g. bold/italics) and embedded links and translates the same regardless of the lists. Thus, the translated text preserve the original formatting.

In an embodiment of the method, the method further comprises the following steps before providing the website: creating the website, for example by an administrator, embedding the plugin into the source code of the website, for example by the administrator or another user, and uploading the website to the web server.

Accordingly, the plugin is integrated to the website and the user can use it with ease when scrolling through websites.

Optionally, the step of embedding the plugin in the source code of the website comprises embedding into the source code: an instruction to create an input button in the provided website and a reference to a plugin module provided on the web server, the translation server or another server, and wherein the step of receiving input from the user includes receiving input from the user via the input button.

It is understood that the input button provided can optionally be customized. For example, the shape, colour, and/or location of the button shown on the website can be adjusted by the user.

In yet another embodiment of the method, the translated text is editable for correcting and displaying translation errors.

Accordingly, the translated text can be edited. For example, the fully automatically generated initial translated text is shown in a dashboard of the plugin, and a user and/or an administrator can edit and/or correct the translated text to improve the quality of the translated text. This allows errors to be corrected and displayed accordingly. If, for example, a user edits and corrects the fully automatically generated initial translated text, the plugin may provide suggestions of possible replacements to certain words of the translated text.

Optionally, the method further comprises: obtaining a feedback from the user with respect to the translated text. Accordingly, the quality of the translation can be improved continuously.

It is another aspect of the present invention to provide a computer-readable storage medium comprising instructions which, when executed by one or more processors, implement the functionality of a plugin according to the above described method. Therefore, the computer-readable storage is suitable for carrying out the above described method.

It is a further aspect of the present invention to provide a web server for performing the steps of the above method.

### Brief description of the drawings

Fig. 1 is a flowchart of an example of a method for translating websites, and
Fig. 2 is a flowchart of an example of a method for translating websites

### Detailed Description of the Embodiments

One or more exemplary embodiments of the present invention are described below in detail. The disclosed embodiments are intended to be illustrative only since numerous modifications and variations therein will be apparent to the skilled person in the art.

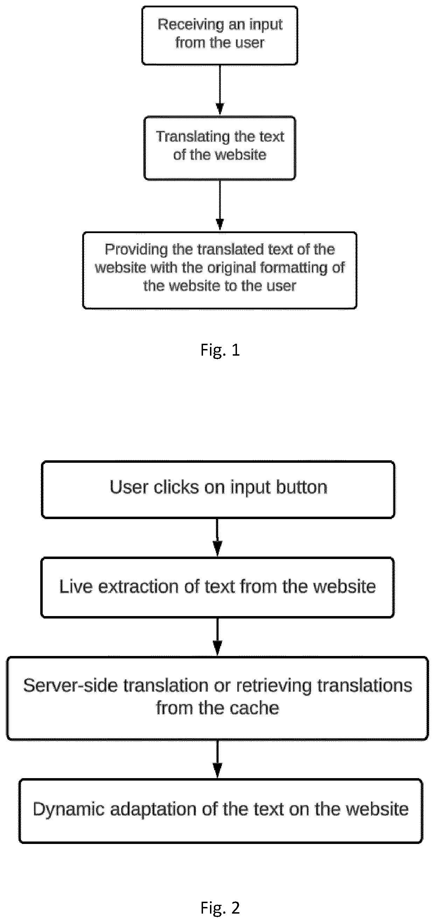

As the example shows in Fig. 1, the method according to the present invention comprises: in a web server, providing a website to a user at a client, wherein the website includes a plugin; by means of the plugin: receiving an input from the user, translating the text of the website, and providing the translated text of the website with the original formatting of the website to the user; wherein translating of the website comprises a translation into Plain Language or Easy Language.

That is to say, the website plugin in the current method allows the translation to be initiated and the translated text to be displayed directly on the website, eliminating the inconvenience of copying and pasting the text of the websites manually to a translator for the translation into Plain Language or Easy Language.

The method for translating websites into Plain Language or Easy Language can further be combined with a translation from one language into another language. In combination, the difficulty of reading foreign and/or professional websites for a user can be greatly reduced.

In the example shown in Fig. 2, the plugin is integrated into websites. The plugin provides an input button on the website for a user to initiate the translation. After receiving the input from the input button, the plugin performs live extraction of text of the website. A whitelist of texts to be extracted and a blacklist of text not to be extracted can be used during the text extraction. Importantly, the original formatting of the text of the website, such as bold, italics, embedded links are detected and retained. Subsequently, the plugin transmits the text of the website, preferably texts in whitelist, to a translation server, and on the translation serve, translated text is generated. When translating, it is firstly checked if the translation pair is present in a cache, and if yes, the translated text would be retrieved from the cache, and if no, the translated text would be generated and stored in the cache. The translated text would then be sent back and dynamically written over the original text of the website, while retaining the original formatting so that there is no layout loss and the rest of the website, which is of less interest, such as the header and footer, is retained.

Accordingly, the current method can work fully automatically and can be integrated into websites, in particular regardless of the CMSs, providing great convenience of a user scrolling through foreign and/or professional websites and reducing the difficulty of the user reading those websites. The method provides high quality of translation into Plain Language or Easy language, and optionally, into another language thanks to modern large language models and specific optimisations. The translated text preserves the original formatting, thus allowing subtle information expressed by formatting to be transferred to the transited text. High efficiency of translation is also ensured thanks to caching.

As an example,a computer-readable storage medium according to the present invention, when the computer-readable storage medium is executed by one or more processors, implements the functionality of a plugin according to the above method.

As an example, a web server according to the present invention, the web server is suitable for performing the steps of the above method.

## Claims

1. A method for translating websites, comprising:
In a web server, providing a website to a user at a client, wherein the website includes a plugin,
by means of the plugin:
receiving an input from the user,
translating the text of the website
providing the translated text of the website with the original formatting of the website to the user,
wherein translating of the website comprises a translation into Plain Language or Easy Language.

2. The method according to claim 1, wherein providing the translated text of the website in original formatting comprises:
dynamically providing a website consisting of the translated text of the website and the original formatting by modifying the nodes of a Document Object Model, DOM tree of the displayed website, or
statically providing a website consisting of the translated text of the website and the original formatting by generating a modified HTML document.

3. The method according to any one claim 1 or 2, wherein translating the website comprises:
by means of the plugin: transmitting the text of the website to a translation server, and
on the translation server: translating the text of the website and sending back the translated text.

4. The method according to claim 3, wherein translating the text of the website on the translation server comprises translating the text of the website using a Large Language Model (LLM), preferably OpenAI GPT4 or Anthropic Claude.

5. The method according to claim 4, wherein translating using a LLM includes at least one of the following steps:
fine-tuning the model with existing Plain Language or Easy Language translations,
using a pass through the LLM using a first prompt with the Plain Language or Easy Language rules,
using a second pass through the LLM using a second prompt, and
automatically editing the translated text to separate and/or hyphenate long words.

6. The method according to any one of claims 2 to 5, wherein translating the website comprises:
checking whether the translation is present in a cache:
if the translation is present in the cache: providing the translation from the cache,
if the translation is not present in the cache: generating a new translation and storing it in the cache.

7. The method according to any one of claims 3 to 6, wherein the plugin is a plugin running on the client, preferably JavaScript, and the step of, by means of the plugin, transmitting the text of the website to a translation server includes:
sending the text of the website from the client to the translation server, or sending a URL of the website from the client to the translation server and, on the translation server, requesting the website from the web server or another web server by means of the URL and extracting the text from the transmitted website.

8. The method according to any one of claims 3 to 6, wherein the plugin is a plugin running on the web server, and the step of, by means of the plugin, transmitting the text of the website to a translation server includes:
extracting and sending the text of the website from the web server to the translation server.

9. The method according to claim 7 or 8, wherein extracting the text of the website comprises:
extracting the matching texts of the website by means of a whitelist and/or a blacklist, wherein texts of a whitelist, preferably texts comprising longer blocks and complex words, are explicitly extracted and texts of a blacklist, preferably comprising embedded links and proper names, are not extracted.

10. The method according to any of the preceding claims, further comprising the following steps before providing the website:
creating the website,
embedding the plugin into the source code of the website, and
uploading the website to the web server.

11. The method according to claim 10, wherein embedding the plugin in the source code of the website comprises embedding into the source code:
an instruction to create an input button in the provided website and a reference to a plugin module provided on the web server, the translation server or another server, and
wherein the step of receiving input from the user includes receiving input from the user via the input button.

12. The method according to any of the preceding claims, wherein the translated text is editable for correcting and displaying translation errors.

13. A computer-readable storage medium comprising instructions which, when executed by one or more processors, implement the functionality of a plugin according to the method of any one of claims 1 to 12.

14. A web server for performing the steps of the method according to any one of claims 1 to 12.

## Amended claims

### Amended claims in accordance with Rule 137(2) EPC.

1. A method for translating websites, comprising:
In a web server, providing a website to a user at a client, wherein the website includes a plugin,
by means of the plugin:
receiving an input from the user,
translating the text of the website
providing the translated text of the website with the original formatting of the website to the user,
**characterized in that** translating of the website comprises a translation into Plain Language or Easy Language,
and **in that** translating the website comprises:
by means of the plugin: transmitting the text of the website to a translation server, and
on the translation server: translating the text of the website and sending back the translated text
**characterized in that** the plugin is a plugin running on the client, preferably JavaScript, and the step of, by means of the plugin, transmitting the text of the website to a translation server includes:
sending the text of the website from the client to the translation server, or
sending a URL of the website from the client to the translation server and, on the translation server, requesting the website from the web server or another web server by means of the URL and extracting the text from the transmitted website.

2. The method according to claim 1, wherein providing the translated text of the website in original formatting comprises:
dynamically providing a website consisting of the translated text of the website and the original formatting by modifying the nodes of a Document Object Model, DOM tree of the displayed website.

3. The method according to claim 1 or 2, wherein translating the text of the website on the translation server comprises translating the text of the website using a Large Language Model (LLM), preferably OpenAl GPT4 or Anthropic Claude.

4. The method according to claim 3, wherein translating using a LLM includes at least one of the following steps:
fine-tuning the model with existing Plain Language or Easy Language translations,
using a pass through the LLM using a first prompt with the Plain Language or Easy Language rules,
using a second pass through the LLM using a second prompt, and
automatically editing the translated text to separate and/or hyphenate long words.

5. The method according to any one of claims 1 to 4, wherein translating the website comprises:
checking whether the translation is present in a cache:
if the translation is present in the cache: providing the translation from the cache,
if the translation is not present in the cache: generating a new translation and storing it in the cache.

6. The method according to one of the preceding claims, wherein extracting the text of the website comprises:
extracting the matching texts of the website by means of a whitelist and/or a blacklist, wherein texts of a whitelist, preferably texts comprising longer blocks and complex words, are explicitly extracted and texts of a blacklist, preferably comprising embedded links and proper names, are not extracted.

7. The method according to any of the preceding claims, further comprising the following steps before providing the website:
creating the website,
embedding the plugin into the source code of the website, and uploading the website to the web server.

8. The method according to claim 7, wherein embedding the plugin in the source code of the website comprises embedding into the source code:
an instruction to create an input button in the provided website and a reference to a plugin module provided on the web server, the translation server or another server, and
wherein the step of receiving input from the user includes receiving input from the user via the input button.

9. The method according to any of the preceding claims, wherein the translated text is editable for correcting and displaying translation errors.

10. A computer-readable storage medium comprising instructions which, when executed by one or more processors, implement the functionality of a plugin according to the method of any one of claims 1 to 9.

11. A web server for performing the steps of the method according to any one of claims 1 to 9.
